# FASCICULE DE BREVET EUROPEEN

(11) **EP 3 552 136 B1**
(45) Date de publication et mention de la délivrance du brevet: **11.10.2023**
(21) Numéro de dépôt: 17812029.1
(22) Date de dépôt: 27.11.2017
(51) Int. Cl.: H04L 9/40, H04W 12/06, G06F 21/44, H04W 8/20, H04W 12/30

(54) **TECHNIQUE DE GESTION D'UN DROIT D'ACCÈS À UN SERVICE POUR UN DISPOSITIF COMMUNICANT**
VERFAHREN ZUR VERWALTUNG EINER ZUGANGSBERECHTIGUNG ZU EINEM DIENST FÜR EINE KOMMUNIKATIONSVORRICHTUNG
TECHNIQUE FOR MANAGING A RIGHT OF ACCESS TO A SERVICE FOR A COMMUNICATING DEVICE

(30) Priorité: 08.12.2016 FR 1662161
(43) Date de publication de la demande: 16.10.2019
(73) Titulaire: Orange, 92130 Issy-les-Moulineaux (FR)
(72) Inventeur: DUCROT, Nicolas, 92326 CHÂTILLON CEDEX (FR); SICART, Julien, 92326 CHÂTILLON CEDEX (FR); GHAROUT, Saïd, 92326 CHÂTILLON CEDEX (FR)
(86) Numéro de dépôt international: PCT/FR2017/053261
(87) Numéro de publication internationale: WO 2018/104610

(56) Documents cités:
- EP-A1- 1 780 897
- EP-A1- 2 461 613
- WO-A1-2007/001129
- US-A1- 2012 244 805

## Description

L'invention se rapporte au domaine général des télécommunications.

L'invention concerne plus particulièrement une technique de gestion d'un droit d'accès à un service pour un dispositif communicant.

La technique de gestion d'un droit d'accès à un service se situe dans le domaine des dispositifs communicants avec alimentation électrique par pile ou batterie.

Par dispositif communicant ou connecté, on entend un dispositif apte à échanger des informations avec d'autres dispositifs. Dans ces dispositifs, on distingue ceux qui échangent des informations par l'intermédiaire d'un réseau de communication administré par un opérateur de réseau, avec selon les cas, un autre dispositif, un terminal de communication ou encore un équipement informatique du réseau de communication. Le réseau de communication peut s'appuyer sur des technologies de réseaux mobiles cellulaires dites 2G, 3G, 4G, 5G ainsi que des technologies de réseaux basse consommation et longue portée LPWA (pour « Low Power Wide Area ») tels que le réseau LoRa.

Du point de vue de l'utilisateur, la communication au moyen de réseaux dits longue portée se différencie de celle au moyen de réseaux dits faible portée (tels que Bluetooth, Bluetooth Low Energy, WiFi, Zigbee, Z-Wave, etc) par les avantages suivants :
- indépendance vis-à-vis d'un équipement intermédiaire pour accéder à un réseau de communication étendu ;
- sécurité : la plupart des technologies longue portée intègre intrinsèquement des caractéristiques de sécurité telles qu'une authentification, un chiffrement, qui offrent une garantie de sécurité native pour les applications mises en oeuvre sur ce réseau ;
- simplicité de configuration et d'utilisation : il n'y a pas besoin de configurer une clé de sécurité ou de réaliser un appairage, opérations qui peuvent se révéler extrêmement complexes pour l'utilisateur lorsque le dispositif n'intègre pas d'écran ou dispose de périphériques d'entrée/sortie limités, ou bien pour des utilisateurs n'étant pas habitués à utiliser ce type de technologies.

Pour connecter un dispositif communicant à un réseau de communication de longue portée, il est généralement nécessaire d'utiliser un abonnement au réseau de communication propre au dispositif communicant. Le dispositif communicant peut alors se connecter de façon autonome et transparente pour son utilisateur à des points d'accès du réseau de communication compatibles avec les moyens de communication du dispositif communicant.

Toutefois, il n'est souvent pas simple pour l'utilisateur du dispositif communicant de gérer la souscription de l'abonnement puis de configurer les moyens de communication du dispositif communicant afin de pouvoir accéder au réseau de l'opérateur.

La publication brevet WO2007/001129 décrit un système permettant d'identifier qu'une batterie insérée dans un dispositif mobile est d'origine au moyen d'un tag inclus dans la batterie.

La publication brevet US2012244805 décrit une batterie pour dispositif mobile comprenant un élément de sécurité.

Un des buts de l'invention est de remédier à des insuffisances/inconvénients de l'état de la technique et/ou d'y apporter des améliorations.

Selon un premier aspect, l'invention a pour objet un procédé de gestion d'un droit d'accès à un service pour un dispositif communicant. Le procédé comprend :
- une authentification d'un élément de sécurité d'un module d'alimentation électrique par un élément de sécurité du dispositif à l'issue de laquelle lesdits éléments de sécurité sont associés, ladite authentification étant déclenchée par une détection d'un début de distribution d'énergie électrique audit dispositif pour alimenter électriquement ledit dispositif ;
- une configuration de l'élément de sécurité du dispositif par l'élément de sécurité du module d'alimentation, l'élément de sécurité du dispositif une fois configuré disposant d'un droit d'accès à un service valide permettant au dispositif d'accéder au service et ledit droit d'accès restant valide tant que ledit dispositif est alimenté par ledit module d'alimentation électrique ;
- une invalidation par l'élément de sécurité du module d'alimentation du droit d'accès dont dispose l'élément de sécurité du dispositif sur détection d'une énergie électrique résiduelle inférieure à un seuil.

La technique de gestion de droit d'accès à un service tire son origine d'un problème constaté pour un droit d'accès à un réseau de communication. Elle est toutefois applicable pour tout service, tel qu'un accès à un réseau de communication, un accès à une donnée, un accès à une application, un accès à une fonctionnalité ou bien une combinaison de ces différents accès.

Par module d'alimentation électrique, on entend une pile ou une batterie destinée à être insérée dans un dispositif communicant pour alimenter ce dernier.

Grâce à cette technique, le droit d'accès à un service dépend de l'alimentation énergétique du dispositif communicant par le module d'alimentation. Ce dernier comprend non seulement une capacité énergétique à fournir au dispositif communicant mais également un droit pour accéder à un service, par exemple au réseau de communication. Le module d'alimentation électrique garantit ainsi au dispositif communicant un droit d'accès au service tant qu'il est en mesure de fournir de l'énergie électrique au dispositif. Le module d'alimentation énergétique intègre ainsi un droit d'accès au service. Lorsque le droit d'accès à un service est un droit d'accès réseau, le module d'alimentation électrique garantit ainsi au dispositif communicant un droit de communiquer au moyen d'un réseau tant qu'il est en mesure de fournir de l'énergie électrique au dispositif. Le module d'alimentation énergétique intègre ainsi un droit à communiquer en utilisant un réseau de communication.

Le droit d'accès à un service n'est plus disponible lorsque le module d'alimentation électrique est déchargé ou bien retiré.

Le parcours utilisateur est ainsi simplifié : pour un accès à un réseau de communication, l'utilisateur ne doit pas gérer une souscription d'abonnement puis configurer son dispositif communicant en fonction de son abonnement. Il en est de même pour un accès à un service. Il suffit à l'utilisateur d'acquérir un module d'alimentation électrique apte à mettre en oeuvre les actions (ou les étapes) du procédé de gestion d'un droit d'accès à un service, de l'insérer dans son dispositif communicant pour accéder au service. Le droit d'accès à un service est renouvelé dès que l'utilisateur insère un nouveau module d'alimentation électrique. L'utilisateur ne doit pas veiller au maintien de son abonnement auprès de l'opérateur de réseau ou bien encore de sa souscription au service.

Cette technique de gestion d'un droit d'accès à un service est particulièrement bien adaptée pour être mise en oeuvre dans des dispositifs communicants, car ceux-ci sont très souvent alimentés en énergie par des modules d'alimentation électrique, tels que des piles ou des batteries, afin de pouvoir être facilement déplacés.

Cette technique est particulièrement intéressante pour les opérateurs de télécommunications ou fournisseurs d'accès à des réseaux de communication longue portée car elle permet la mise en oeuvre d'un modèle de distribution du droit d'accès à un service utilisant un réseau de distribution préexistant, c'est-à-dire celui des piles ou batteries. De plus, le parcours utilisateur est connu et maitrisé de bout en bout par une très grande partie des consommateurs et utilisateurs finaux : il suffit d'acheter puis d'insérer ou de changer une pile au sein d'un dispositif. Lorsque le droit d'accès à un service est un droit d'accès à un réseau de communication, également appelé droit d'accès réseau, une telle technique est susceptible de faciliter et d'encourager l'émergence de nouveaux dispositifs communicants au sein de l'industrie de l'Internet des Objets, de par les problèmes et freins qu'elle supprime en ce qui concerne l'accès au réseau de communication longue portée. Ces freins sont aussi bien techniques que commerciaux : complexité à installer puis à configurer l'accès au réseau, complexité à acheter le droit d'accès réseau et à le consommer.

Il est ici souligné que les échanges entre les deux éléments de sécurité sont effectués par l'intermédiaire d'une connexion de proximité, telle qu'une interface filaire ou encore une liaison sans fil en champ proche. L'élément de sécurité du dispositif est configuré pour pouvoir notamment effectuer l'authentification de l'élément de sécurité du module d'alimentation électrique sans nécessiter d'échanges avec des serveurs accessibles par l'intermédiaire d'un réseau de communication étendu. A cet effet, l'élément de sécurité du dispositif dispose des moyens nécessaires à la vérification de l'authenticité de l'élément de sécurité du module d'alimentation électrique.

Le module d'alimentation électrique peut anticiper sa décharge complète et veiller à la suppression du droit d'accès dans le dispositif communicant.

Les différents modes ou caractéristiques de réalisation mentionnés ci-après peuvent être ajoutés indépendamment ou en combinaison les uns avec les autres, au procédé de gestion tel que défini précédemment.

Dans un mode de réalisation particulier du procédé de gestion, l'élément de sécurité du module d'alimentation électrique authentifie également l'élément de sécurité du dispositif. Ainsi, chacun des éléments de sécurité dispose des moyens nécessaires à la vérification de l'authenticité de son élément de sécurité pair.

Dans un mode de réalisation particulier du procédé de gestion, une association antérieure avec un autre dispositif est supprimée suite audit début de distribution d'énergie électrique.

La suppression des associations antérieures entre un élément de sécurité d'un module d'alimentation électrique et un élément de sécurité d'un dispositif communicant permet de garantir qu'un utilisateur ne peut continuer à bénéficier du droit d'accès en alimentant son dispositif communicant de manière standard. Une fois inséré dans un dispositif communicant, les actions décrites précédemment sont de nouveau mises en oeuvre par le module d'alimentation électrique.

Dans un mode de réalisation particulier du procédé de gestion, ladite configuration comprend au moins un envoi d'une information relative à la validité du droit d'accès à l'élément de sécurité du dispositif.

Il est ainsi possible de donner le droit d'accès pour une durée donnée et à l'expiration de ce droit, de forcer une communication entre les deux éléments de sécurité.

Dans un mode de réalisation particulier du procédé de gestion, la configuration comprend un envoi d'une information relative à un profil d'accès au réseau de communication à télécharger par l'élément de sécurité du dispositif.

Dans ce mode de réalisation particulier, l'élément de sécurité est une carte de type eUICC. L'élément de sécurité du dispositif peut alors télécharger le profil d'accès qui lui permettra d'accéder ensuite de manière non limitée à un réseau de communication.

Dans un mode de réalisation particulier du procédé de gestion, la configuration comprend une activation du droit d'accès mémorisé par l'élément de sécurité du dispositif.

Dans un mode de réalisation particulier du procédé de gestion, la configuration comprend un envoi par l'élément de sécurité du module d'alimentation à l'élément de sécurité du dispositif d'au moins une clé de sécurité.

Selon un deuxième aspect, l'invention concerne un module d'alimentation électrique destiné à alimenter électriquement un dispositif communicant. Ce module comprend :
- des moyens pour alimenter électriquement un dispositif à alimenter ;
- un élément de sécurité comprenant :
   - un module de détection, agencé pour détecter un début de distribution d'énergie électrique audit dispositif ;
- un module d'authentification, agencé pour s'authentifier auprès d'un élément de sécurité du dispositif à l'issue de laquelle lesdits éléments de sécurité sont associés ;
- un module de configuration, agencé pour configurer l'élément de sécurité du dispositif, l'élément de sécurité du dispositif une fois configuré disposant d'un droit d'accès à un service valide permettant au dispositif d'accéder au service et ledit droit d'accès restant valide tant que ledit dispositif est alimenté par ledit module d'alimentation électrique ;
- un module de commande, agencé pour commander une invalidation du droit d'accès dont dispose l'élément de sécurité du dispositif sur détection d'une énergie électrique résiduelle inférieure à un seuil..

Les avantages énoncés pour le procédé de gestion de droit d'accès à un service selon le premier aspect sont transposables directement au module d'alimentation électrique.

Selon un quatrième aspect, l'invention concerne un programme pour un module d'alimentation électrique, comprenant des instructions de code de programme destinées à commander l'exécution de celles des actions du procédé de gestion de droit d'accès à un service précédemment décrit mises en oeuvre par le module d'alimentation électrique, lorsque ce programme est exécuté par ce module et un support d'enregistrement lisible par un module d'alimentation électrique sur lequel est enregistré un programme pour un module d'alimentation électrique.

Les avantages énoncés pour le procédé de gestion de droit d'accès à un service selon le premier aspect sont transposables directement au programme pour un module d'alimentation électrique et au support d'enregistrement.

La technique de gestion d'un droit d'accès à un service d'un dispositif communicant sera mieux comprise à l'aide de la description suivante de modes de réalisation particuliers, en référence aux dessins annexés sur lesquels :
- la figure 1 représente un dispositif communicant et un module d'alimentation électrique dans un mode de réalisation particulier ;
- la figure 2a illustre des étapes d'un procédé de gestion d'un droit d'accès à un service selon un mode particulier de réalisation ;
- la figure 2b illustre des étapes d'un procédé de gestion d'un droit d'accès à un service selon un mode particulier de réalisation ;
- la figure 3a représente un dispositif communicant selon un mode particulier de réalisation ;
- la figure 3b représente un élément de sécurité d'un dispositif communicant selon un mode particulier de réalisation ;
- la figure 3c représente un élément de sécurité d'un module d'alimentation électrique selon un mode particulier de réalisation.

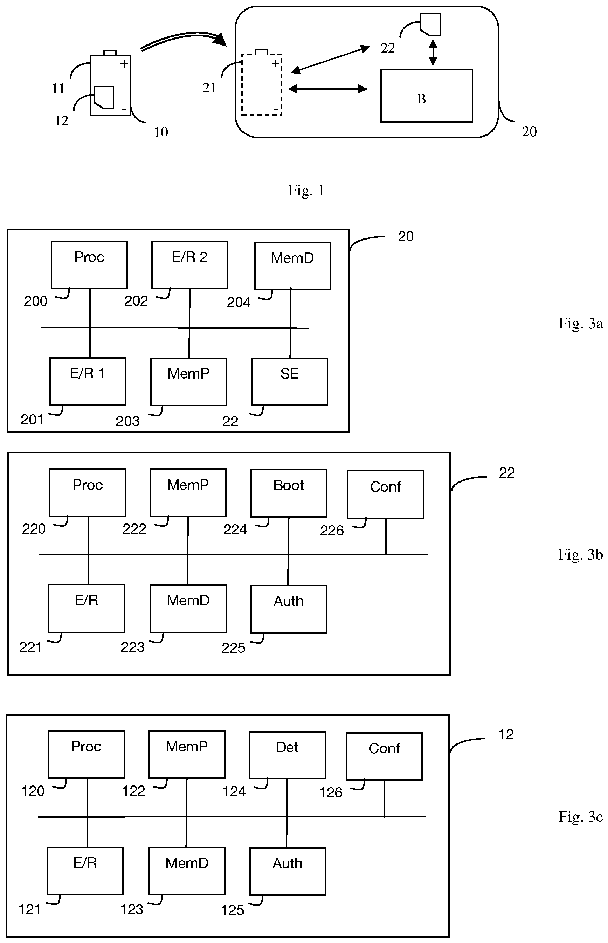

La **figure 1** représente un dispositif communicant 20 et un module d'alimentation électrique 10 dans un mode de réalisation particulier.

Un dispositif ou objet communicant ou connecté, est un objet adapté pour échanger des informations par l'intermédiaire d'un réseau de communication, avec selon les cas, un autre objet, un terminal de communication ou encore un équipement informatique du réseau de communication. Ainsi, un terminal mobile, une montre adaptée pour transmettre des informations à un terminal mobile via un réseau de communication étendu tel que le réseau Internet, un détecteur de fumée adapté pour communiquer avec un terminal mobile distant afin de signaler la présence de fumée dans une maison constituent des exemples d'objets connectés. Dans l'exemple décrit ici, le dispositif communicant 20 est un boitier de surveillance médicale, adapté pour mesurer des caractéristiques physiques de l'utilisateur qui le porte, par exemple son rythme cardiaque et pour transmettre des mesures à un dispositif informatique distant par l'intermédiaire d'un réseau de communication (non représenté sur la figure 1).

Le réseau de communication comporte au moins un réseau d'accès à un réseau de communication étendu, par exemple le réseau Internet. Le réseau d'accès peut être un réseau cellulaire mobile, par exemple de type 2G, 3G, 4G, 5G, ou un réseau basse consommation et longue portée LPWA (pour « Low Power Wide Area ») tel que le réseau LoRa .

Le module d'alimentation électrique 10 comprend notamment des moyens 11 agencés pour alimenter en énergie électrique un dispositif à alimenter et un élément de sécurité 12. Les moyens 11 correspondent par exemple à une pile électrique ou pile, agencée pour transformer une énergie d'une réaction chimique en énergie électrique. Une telle pile est à usage unique et ne peut être rechargée. Dans un autre exemple de réalisation, les moyens 11 correspondent à une batterie rechargeable. Dans cet exemple, la batterie est rechargée avec un appareil de recharge qui gère également un rechargement du droit d'accès au service dans la batterie.

Lorsque le module d'alimentation électrique 10 est inséré ou connecté à un dispositif à alimenter, celui-ci se décharge en alimentant en énergie ce dispositif.

Le format du module d'alimentation électrique peut être basé sur un standard existant de pile ou de batterie, tel que LR6, LR3, LR14, 6LR61, CR2032, CR2016, CR2012, CR1220, etc... Dans un autre mode de réalisation particulier, le format du module d'alimentation électrique peut être basé sur un format de batterie spécifique au dispositif communicant, adapté à son usage, en particulier aux besoins de format, de consommation d'énergie et de connectivité de celui-ci.

L'élément de sécurité 12 est une plateforme dédiée inviolable, comprenant du matériel et du logiciel, apte à héberger de manière sécurisée une application et ses données de sécurité. Dans des modes de réalisation particuliers, l'élément de sécurité 12 est un système sur une puce SoC (pour « System on Chip »), un élément sécurisé matériel de type SE (pour « Secure Element »), un circuit intégré IC (pour « Integrated Circuit »). Dans un autre mode de réalisation particulier, l'élément de sécurité fournit en outre un environnement d'exécution d'applications sécurisé (« Trusted Execution Environment »). Alternativement, d'autres éléments ou mécanismes de sécurité peuvent être prévus, permettant de garantir la sécurisation du procédé de gestion selon le droit d'accès concerné.

La **figure 3c** illustre de manière schématique l'élément de sécurité 12 dans un mode de réalisation particulier. L'élément de sécurité 12 comprend notamment :
- un processeur 120 pour exécuter des instructions de code de modules logiciels ;
- un module de communication 121, formant une interface de communication avec un autre élément de sécurité ;
- une zone mémoire 122, agencée pour mémoriser un programme qui comprend des instructions de code pour mettre en oeuvre les étapes du procédé de gestion ;
- une mémoire de stockage 123, agencée pour stocker des données utilisées lors de la mise en oeuvre du procédé de gestion ;
- un module de détection 124, agencé pour détecter un début de distribution d'énergie électrique audit dispositif ;
- un module d'authentification 125, agencé pour s'authentifier auprès d'un élément de sécurité d'un dispositif alimenté, les deux éléments de sécurité étant associés une fois l'élément de sécurité 12 authentifié ;
- un module de configuration 126, agencé pour configurer l'élément de sécurité du dispositif, l'élément de sécurité du dispositif une fois configuré disposant d'un droit d'accès à un service valide permettant au dispositif d'accéder à ce service et ce droit d'accès restant valide tant que le dispositif est alimenté.

Dans un mode de réalisation particulier, le module d'authentification 125 est également agencé pour mettre en oeuvre une authentification de l'élément de sécurité 22 du dispositif.

Le dispositif communicant 20, tel que représenté à la figure 1, comprend notamment un réceptacle 21, prévu pour recevoir un module d'alimentation électrique 10, un élément de sécurité 22, un bloc noté B regroupant l'ensemble des modules de traitement du dispositif communicant. Le réceptacle 21 est par exemple moulé et accessible en retirant une coque du dispositif communicant 20. L'architecture matérielle du dispositif communicant 20 est plus précisément décrite ultérieurement en relation avec la figure 3a.

L'élément de sécurité 22 est une plateforme dédiée inviolable, comprenant du matériel et du logiciel, apte à héberger de manière sécurisée des applications et leurs données confidentielles et cryptographiques et fournissant un environnement d'exécution d'applications sécurisé, par exemple une carte de type UICC. Alternativement, d'autres éléments ou mécanismes de sécurité peuvent être prévus, permettant de garantir la sécurisation du procédé de gestion du droit d'accès.

La **figure 3b** illustre de manière schématique l'élément de sécurité 22 dans un mode de réalisation particulier. L'élément de sécurité 22 comprend notamment :
- un processeur 220 pour exécuter des instructions de code de modules logiciels ;
- un module de communication 221, formant une interface de communication avec un autre élément de sécurité, par l'intermédiaire d'un dispositif communicant ;
- une zone mémoire 222, agencée pour mémoriser un programme qui comprend des instructions de code pour mettre en oeuvre des étapes du procédé de gestion ;
- une mémoire de stockage 223, agencée pour stocker des données utilisées lors de la mise en oeuvre du procédé de gestion.
- un module d'amorçage 224, agencé pour démarrer ledit élément de sécurité suite à un début de distribution d'énergie électrique au dispositif ;
- un module d'authentification 225, agencé pour mettre en oeuvre une authentification d'un élément de sécurité du module d'alimentation électrique à l'issue de laquelle les éléments de sécurité sont associés ;
- un module de configuration 226, agencé pour être configuré par l'élément de sécurité du module d'alimentation électrique, l'élément de sécurité du dispositif une fois configuré disposant d'un droit d'accès à un service valide permettant au dispositif d'accéder au service et ce droit d'accès restant valide tant que le dispositif est alimenté par le module d'alimentation électrique.

Dans un mode de réalisation particulier, le module d'authentification 225 est également agencé pour s'authentifier auprès de l'élément de sécurité du module d'alimentation électrique.

Dans un mode de réalisation particulier, l'élément de sécurité 22 est de type carte eUICC (de l'anglais « embedded Universal Integrated Circuit Card »), également appelée « eSIM » (de l'anglais « embedded Subscriber Identity Module »), ou carte SIM embarquée ou inamovible, tel qu'en cours de spécification technique dans le cadre de l'association GSMA.

Il est ici souligné que les deux éléments de sécurité 12, 22 peuvent se présenter sous des formes différentes.

On appelle « droit d'accès à un service » une ou des données d'accès, qui une fois rendues valides par l'élément de sécurité 12 auprès de l'élément de sécurité 22, vont permettre au dispositif communicant 20 d'accéder à un service. Cette ou ces données d'accès dépendent du service auquel le dispositif communicant doit accéder. Le service peut correspondre à un accès à une donnée disponible dans le dispositif communicant, sur un serveur à distance ou bien sur un autre dispositif communicant, un accès à une application disponible dans le dispositif communicant, sur un serveur à distance ou bien sur un autre dispositif communicant, un accès à une fonctionnalité ou un accès à un réseau de communication. Il est possible de combiner plusieurs droits d'accès à un service.

Lorsqu'il s'agit d'un droit d'accès à un réseau de communication, également appelé droit d'accès réseau, cette ou ces données d'accès dépendent de la technologie d'accès du réseau de communication auquel le dispositif communicant 20 doit accéder.

Lorsque le réseau de communication est un réseau mobile, l'élément de sécurité 22 peut correspondre à une carte SIM classique qui a été configurée au préalable auprès d'un opérateur de réseau. La validation du droit d'accès correspond par exemple à un envoi d'un signal ou d'un message d'activation de l'élément de sécurité 22 ou bien encore à une activation d'un module de communication du dispositif communicant 20.

Toujours pour ce même type de réseau de communication, l'élément de sécurité 22 peut correspondre à une carte SIM programmable à distance, c'est-à-dire configurable à distance ou « over the air ». Cette technique est connue sous le terme de post-allocation à distance d'un profil d'accès d'un élément de sécurité. Le droit d'accès correspond dans ce cas à un profil d'accès à télécharger par l'élément de sécurité 22. Ce droit d'accès est envoyé par l'élément de sécurité 12 à l'élément de sécurité 22. Dans ce mode de réalisation particulier, l'élément de sécurité 22 comprend un profil d'accès limité (dit profil de démarrage ou « bootstrap ») auprès du réseau d'un opérateur, permettant uniquement d'accéder à un réseau pour télécharger un profil d'accès réseau, identifié par le droit d'accès fourni par l'élément de sécurité 12. Plus précisément, un profil d'accès a été généré par un serveur de gestion de données de souscription, non représenté sur la figure 1, lié à l'opérateur. Le profil d'accès comprend une application d'accès au réseau et des données d'accès associées (on parle de « credentials » en anglais), telles que des clés cryptographiques et des algorithmes. Le profil d'accès une fois installé et autorisé permet un accès à une infrastructure d'un réseau mobile donné. Il permet notamment d'authentifier le dispositif communicant 20, plus précisément l'élément de sécurité 22 lors d'un accès au réseau de l'opérateur.

Lorsque le réseau de communication est un réseau de type longue portée et basse consommation, par exemple LoRA, le droit d'accès correspond à une clé de sécurité. Dans un premier mode de réalisation particulier, une donnée d'accès correspond à une clé de communication qui permet au dispositif communicant 20 de s'authentifier auprès d'équipements du réseau de communication. A titre d'exemple illustratif, lorsque le réseau de communication correspond à un réseau LoRa, la donnée d'accès est la clé réseau LoRa, appelée « Network Key ». Cette clé réseau permet à l'élément de sécurité 22 de calculer une ou plusieurs clés de session, appelées « Network Session Key ». Ce mode de réalisation est adapté lorsque le dispositif communicant 20, plus précisément l'élément de sécurité 22, est certifié au préalable par l'opérateur du réseau de communication. Dans ce mode de réalisation, l'élément de sécurité 12 est apte à authentifier l'élément de sécurité 22 ou de vérifier que l'élément de sécurité 22 est de confiance. Ceci permet de garantir que la clé réseau n'est pas fournie à un élément de sécurité non autorisé.

Dans un deuxième mode de réalisation particulier, une donnée d'accès correspond directement à une clé de session réseau à utiliser. Ce mode de réalisation est adapté lorsque le dispositif communicant 20, plus précisément l'élément de sécurité 22, n'est pas certifié au préalable par l'opérateur du réseau de communication. Dans ce cas, aucun secret long terme n'est transmis par l'élément de sécurité 12 du module d'alimentation électrique 10 à l'élément de sécurité 22 du dispositif communicant 20. L'élément de sécurité 12 du module d'alimentation électrique 10 contient la clé réseau et calcule la clé de session réseau à utiliser. L'élément de sécurité 22 du dispositif communicant 20 interroge alors régulièrement l'élément de sécurité 12 du module d'alimentation électrique 10 afin d'obtenir une nouvelle clé de session réseau.

Dans un autre mode de réalisation, le droit d'accès correspond à une autorisation de configuration par interface radio (« over the air ») d'une clé réseau.

Dans un autre mode de réalisation, le droit d'accès à un service est validé par l'élément de sécurité 12 auprès de l'élément de sécurité 22 et permet au dispositif communicant 20 d'accéder au service.

Dans un mode de réalisation particulier, l'élément de sécurité 12 mémorise un couple de clés : une clé privée qui lui est propre, utilisée pour signer des données, et une clé publique associée. Un certificat de clé publique, par exemple un certificat de type X509, a été émis pour certifier la clé publique par un émetteur de certificat. L'élément de sécurité 22 du dispositif communicant 20 mémorise le certificat de clé publique de l'émetteur de certificat. Ceci permet à l'élément de sécurité 22 de vérifier localement le certificat de l'élément de sécurité 12.

Dans un autre mode de réalisation, chaque élément de sécurité 12, 22 mémorise un couple de clés : une clé privée qui lui est propre, utilisée pour signer des données, et une clé publique associée. Un certificat de clé publique, par exemple un certificat de type X509, a été émis pour certifier la clé publique par un émetteur de certificat. Les deux certificats de clé publique sont signés par le même émetteur de certificat, afin de permettre une authentification mutuelle en local.

Les certificats présentés peuvent être des certificats individuels, ou des certificats de groupe pour préserver l'anonymat du ou des éléments de sécurité.

Dans un mode de réalisation particulier, l'authentification est explicite par mise en oeuvre d'un protocole à divulgation nulle de connaissance. Chaque élément de sécurité apporte la preuve de la connaissance d'un secret sans avoir à le divulguer.

La **figure 3a** illustre de manière schématique un dispositif communicant 20 dans un mode de réalisation particulier. Le dispositif communicant 20 comprend notamment :
- un processeur 200 pour exécuter des instructions de code de modules logiciels ;
- un module de communication 201, formant une interface de communication avec un réseau de communication, agencé pour communiquer avec des dispositifs d'un réseau de communication ;
- un module de communication 202, formant une interface de communication avec un élément de sécurité ;
- une zone mémoire 203, agencée pour mémoriser un programme qui comprend des instructions de code pour mettre en oeuvre des étapes du procédé de gestion ;
- une mémoire de stockage 204 , agencée pour stocker des données utilisées lors de la mise en oeuvre du procédé de gestion ;
- un élément de sécurité 22, tel que décrit précédemment.

L'accès à un service pour le dispositif communicant dépend en particulier d'un droit d'accès au service.

Dans le cas particulier où le droit d'accès à un service est un droit d'accès réseau, le module de communication 201 est opérationnel lorsqu'un droit d'accès valide est configuré.

Il est ici souligné que le dispositif communicant 20 comprend également d'autres modules de traitement, non représentés sur la figure 3a, agencés pour mettre en oeuvre les différentes fonctions de dispositif communicant.

Dans un mode de réalisation particulier, le module de communication 221 est notamment agencé pour communiquer avec le module de communication 121 au moyen d'une interface physique par exemple filaire. Le module de communication 121 est notamment agencé pour communiquer avec le module de communication 221 au moyen de cette interface physique.

Dans un autre mode de réalisation particulier, le module de communication 221 est notamment agencé pour communiquer avec le module de communication 121 au moyen d'un protocole de communication sans fil en champ proche ou faible portée. Le module de communication 121 est notamment agencé pour communiquer avec le module de communication 221 au moyen de ce protocole de communication.

Dans un mode de réalisation particulier, les échanges entre les deux éléments de sécurité 12, 22 s'effectuent par l'intermédiaire d'un canal de communication sécurisé.

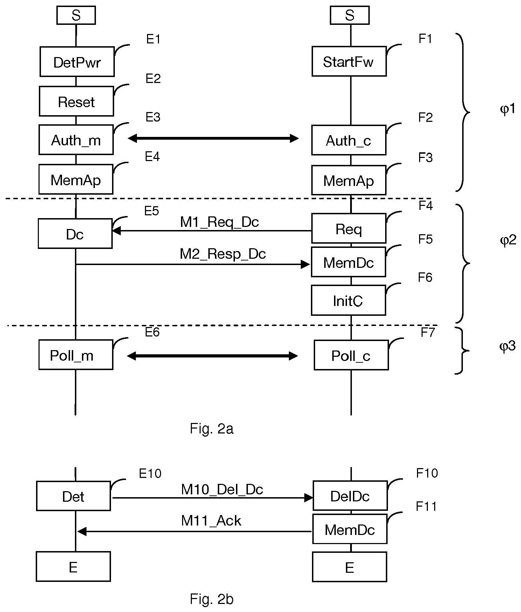

Le procédé de gestion d'un droit d'accès à un service mis en oeuvre par l'élément de sécurité 12 du module d'alimentation électrique et l'élément de sécurité 22 va maintenant être décrit en relation avec les figures 2a et 2b.

La figure 2a illustre des étapes du procédé de gestion d'un droit d'accès à un service pour le dispositif communicant 20 permettant de configurer l'élément de sécurité 22 avec le droit d'accès à un service.

La suite de la description se place à titre illustratif dans le cas particulier du droit d'accès réseau.

A l'état initial, le dispositif communicant 20 n'est pas alimenté. Le module d'alimentation électrique 10 (plus précisément les moyens d'alimentation 11) ne délivre pas d'énergie électrique. Le dispositif communicant 20 ne peut pas accéder au réseau de communication.

Le module d'alimentation électrique 10 est inséré dans le dispositif communicant 20 dans la zone 21 qui est prévue à cet effet. Le dispositif communicant 20 et l'élément de sécurité 22 sont alors alimentés en énergie électrique par le module d'alimentation électrique 10. L'élément de sécurité 12 est également alimenté en énergie électrique.

Dans une étape F1, l'élément de sécurité 22 démarre un programme d'amorçage.

Dans une étape E1, l'élément de sécurité 12 détecte un début de distribution d'énergie électrique par le module d'alimentation électrique 10 au dispositif communicant 20 et à l'élément de sécurité 22. Cette détection (suite au début de distribution d'énergie électrique) déclenche une étape E2, dans laquelle l'élément de sécurité 12 supprime une association antérieure avec un dispositif communicant. Ainsi, l'élément de sécurité 12 s'apparie de nouveau à chaque insertion dans un dispositif communicant, tant que le module d'alimentation électrique 10 dispose toujours d'énergie électrique.

Cette détection d'un début de distribution d'énergie électrique au dispositif communicant 20 déclenche également une authentification de l'élément de sécurité 12 du module d'alimentation 10 par l'élément de sécurité 22 du dispositif communicant 20 à l'issue de laquelle ces éléments de sécurité 12, 22 sont associés.

Plus précisément, l'élément de sécurité 22 du dispositif contacte dans une étape F2 l'élément de sécurité 12 du module d'alimentation électrique 10 et authentifie celui-ci. Cette authentification s'effectue par exemple au moyen d'un certificat de clé publique mémorisé dans l'élément de sécurité 12 du module d'alimentation électrique 10. On rappelle ici que ce certificat est signé par un émetteur de certificat. Dans un mode de réalisation particulier, l'élément de sécurité 22 du dispositif communicant 20 dispose d'un certificat de clé publique de l'émetteur de certificat, afin de mettre en oeuvre l'authentification en local. Cette authentification permet de garantir que le module d'alimentation électrique 10 est bien autorisé par l'opérateur de réseau à fournir et à configurer un droit d'accès réseau.

Si cette authentification échoue, le module d'alimentation électrique 10 cesse d'alimenter électriquement le dispositif communicant 20.

Dans un autre mode de réalisation particulier, dans une étape E3, l'élément de sécurité 12 du module d'alimentation 10 authentifie également l'élément de sécurité 22 du dispositif communicant 20. L'authentification est alors mutuelle. Cette authentification s'effectue par exemple au moyen des certificats de clés publiques mémorisés dans les éléments de sécurité 12, 22. Cette authentification mutuelle permet de garantir que le module d'alimentation électrique 10 est bien autorisé par l'opérateur de réseau pour configurer un droit d'accès réseau et que le dispositif communicant 20 est autorisé par ce même opérateur de réseau à accéder au réseau de communication. Si cette authentification mutuelle échoue, le module d'alimentation électrique 10 cesse d'alimenter électriquement le dispositif communicant 20.

Lorsque l'élément de sécurité 22 a authentifié l'élément de sécurité 12, ou dans l'autre mode de réalisation, lorsque les deux éléments de sécurité 12, 22 se sont authentifiés mutuellement, ils sont alors appariés ou associés. Dans une étape E4, l'élément de sécurité 12 mémorise un identifiant de l'élément de sécurité 22 du dispositif communicant 20 avec lequel il s'est apparié. Dans une étape F3, l'élément de sécurité 22 mémorise un identifiant de l'élément de sécurité 12 du module d'alimentation électrique 10 avec lequel il s'est apparié. Ceci termine la phase ϕ1 d'appairage ou d'association entre le module d'alimentation électrique 10 et le dispositif communicant 20.

Une fois cet appairage (ou association) effectué, dans une phase ϕ2, l'élément de sécurité 12 du module d'alimentation électrique 10 configure l'élément de sécurité 22 du dispositif communicant 20, afin que ce dernier dispose d'un droit d'accès réseau valide lui permettant d'accéder au réseau de communication.

Dans une étape F4, l'élément de sécurité 22 demande (message M1) un droit d'accès réseau à l'élément de sécurité 12. Cette demande est reçue par l'élément de sécurité 12 dans une étape E5. Toujours dans cette étape E5, l'élément de sécurité 12 renvoie (message M2) le droit d'accès réseau à l'élément de sécurité 22, qui le reçoit dans une étape F5.

Dans une étape F6, l'élément de sécurité 22 mémorise le droit d'accès reçu dans la zone mémoire 223. Le droit d'accès reste valide tant que le dispositif communicant 20 est alimenté électriquement par le module d'alimentation électrique. Plus précisément, le droit d'accès reste valide tant que les deux éléments de sécurité 12, 22 sont appariés. Lorsque le module d'alimentation électrique 10 est retiré, le dispositif communicant 20 n'est plus alimenté et le droit d'accès réseau est supprimé. Il en est de même lorsque le module d'alimentation électrique 10 est déchargé. La validité du droit d'accès réseau est ainsi liée à une alimentation électrique du dispositif communicant 20. Le droit d'accès donne ainsi un accès d'accès au réseau, tant que le dispositif communicant 20 est alimenté par le module d'alimentation électrique. En effet, un dispositif communicant 20 qui accède au réseau de façon importante va consommer plus rapidement l'énergie électrique du module d'alimentation 10, ce qui limite la durée de validité de son droit d'accès. Il est ainsi avantageux de lier une énergie électrique disponible d'un module d'alimentation 10 à un droit d'accès réseau.

Dans une première forme de réalisation, l'élément de sécurité 12 active un droit d'accès mémorisé par l'élément de sécurité 22 du dispositif 20. Plus précisément, l'élément de sécurité 12 envoie un signal ou un message d'activation de l'élément de sécurité 22 ou bien encore une commande d'activation d'un module de communication du dispositif communicant 20.

Dans une deuxième forme de réalisation, l'élément de sécurité 12 envoie une information relative à un profil d'accès au réseau de communication à télécharger par l'élément de sécurité 22 du dispositif. Plus précisément, il commande un téléchargement d'un profil d'accès par l'élément de sécurité 22. Ce profil d'accès à télécharger est identifié par un code d'activation AC. Tel que défini au paragraphe 4.1 de la spécification technique de la GSMA « SGP.22 - RSP Technical Spécification» v.1.1 datée du 9 juin 2016 (disponible sur le site de la GSMA à l'adresse http://www.gsma.com/newsroom/all-documents/sgp-22-technical-specification-vl-1/), un code d'activation AC correspond à une chaîne de caractères et comprend différents éléments d'information séparés par un caractère « $ ». Le code d'activation AC comprend notamment une adresse d'un serveur à contacter pour obtenir le profil d'accès, un jeton d'accès au profil et un identifiant du serveur.

Dans une troisième forme de réalisation, l'élément de sécurité 12 envoie une clé de sécurité, plus précisément une clé réseau, permettant à l'élément de sécurité 22 de calculer une ou plusieurs clés de session.

Dans une quatrième forme de réalisation, l'élément de sécurité 12 envoie au moins une clé de sécurité, plus précisément une clé de session. L'élément de sécurité 22 interroge alors régulièrement l'élément de sécurité 12 afin d'obtenir une nouvelle clé de session.

Dans une cinquième forme de réalisation, l'élément de sécurité 12 envoie une autorisation de configuration par interface radio d'une clé réseau.

Dans un mode de réalisation particulier, l'élément de sécurité 12 envoie également une information relative à la validité du droit d'accès à l'élément de sécurité 22 du dispositif communicant 20. Cette information correspond par exemple à une durée de validité du droit d'accès. Ainsi, l'élément de sécurité 22 demande de nouveau un droit d'accès réseau lorsque le précédent n'est plus valide. Ceci permet de sécuriser l'accès au réseau. Cette information peut également correspondre à une information de débit maximum auquel le dispositif communicant 20 a droit pour accéder au réseau de communication.

Dans un mode de réalisation particulier, dans une phase ϕ3, un mécanisme régulier de vérification du droit d'accès est mis en oeuvre par l'élément de sécurité 22. Dans une étape F7, celui-ci va ainsi vérifier de manière périodique que le droit d'accès réseau est valide par un simple échange avec l'élément de sécurité 12 du module d'alimentation électrique (étape E6). Cette vérification régulière du droit d'accès réseau peut consister en une authentification de l'élément de sécurité 12 du module d'alimentation électrique par l'élément de sécurité 22 du dispositif communicant.

Dans un mode de réalisation particulier, l'élément de sécurité 12 transmet également une information relative au pourcentage de droit d'accès restant (correspondant au pourcentage d'énergie électrique déjà consommé). L'utilisateur du dispositif communicant peut être notifié de cette information par l'intermédiaire d'une interface homme-machine.

Une fois l'énergie électrique du module d'alimentation 10 consommée, le dispositif communicant 20 n'est plus alimenté et le droit d'accès réseau n'est plus valide. Lorsque le dispositif communicant 20 est de nouveau alimenté, une nouvelle authentification est mise en oeuvre, conduisant à un nouvel appairage et un nouveau droit d'accès réseau.

Il en est de même en cas de retrait du module d'alimentation 10.

Si le module d'alimentation 10 contient encore de l'énergie électrique, il est de nouveau appariable lorsqu'il est inséré dans un dispositif communicant.

La **figure 2b** illustre des étapes du procédé de gestion d'un droit d'accès réseau selon un mode particulier de réalisation. Dans une étape E10, l'élément de sécurité 12 détecte que l'énergie électrique résiduelle du module d'alimentation électrique est inférieure à un seuil. Dans ce cas, toujours dans cette étape E10, l'élément de sécurité 12 commande (message M10) une invalidation du droit d'accès réseau dont dispose l'élément de sécurité 22 du dispositif communicant 20. Dans une étape F10, l'élément de sécurité 22 reçoit cette commande et efface dans une étape F11 le droit d'accès réseau qu'il avait précédemment mémorisé. L'élément de sécurité 22 acquitte par un message M11 la suppression du droit d'accès réseau. L'utilisateur du dispositif communicant peut être informé de cette suppression par l'intermédiaire d'une interface homme-machine.

Dans un mode de réalisation particulier, l'élément de sécurité 22 transmet à un serveur de l'opérateur une notification indiquant que le droit d'accès réseau a été utilisé par le dispositif communicant 20 et doit être révoqué.

Les modes de réalisation qui ont été décrits s'appuient sur un unique module d'alimentation électrique 10. Certains dispositifs communicants peuvent nécessiter de combiner plusieurs modules 10.

Au niveau électrique, la combinaison d'énergie s'effectue de manière similaire à celle effectuée pour des modules standards.

Dans un mode de réalisation particulier, l'élément de sécurité 22 s'apparie avec chacun des éléments de sécurité 12 des modules d'alimentation électrique. L'élément de sécurité 22 dispose alors du droit d'accès réseau lorsqu'il a reçu un droit d'accès réseau secondaire de chacun des éléments de sécurité 12 (pour chacun des modules d'alimentation électrique). Le dispositif communicant 20 accède au réseau de communication uniquement lorsque le nombre suffisant de modules 10 est inséré et que donc le nombre correspondant d'éléments de sécurité 12 est apparié.

Dans un mode de réalisation particulier, le droit d'accès réseau est déterminé en combinant les droits d'accès secondaires obtenus de chacun des éléments de sécurité 12. Dans l'exemple de réalisation pour le réseau LoRa, à titre illustratif, une clé réseau utilisée par le dispositif communicant 20 est calculée en fonction des clés réseau reçues des différents éléments de sécurité 12.

Le mécanisme régulier de vérification du droit d'accès réseau est alors mis en oeuvre par l'élément de sécurité 22 pour l'ensemble des éléments de sécurité 12 appariés.

Les modes de réalisation ont été décrits dans un cas particulier où le droit d'accès à un service est un droit d'accès réseau, permettant au dispositif communicant d'accéder à un réseau de communication.

Cette description est aisément transposable au cas plus général d'un droit d'accès à un service, tel que :
- un accès à une ou des données disponibles dans le dispositif communicant, sur un serveur à distance ou bien encore sur un autre dispositif communicant ;
- un accès à une application ou un ensemble d'applications, disponibles dans le dispositif communicant, sur un serveur à distance ou bien encore sur un autre dispositif communicant ;
- un accès à une fonctionnalité ;
- une combinaison de droits d'accès à différents services.

On comprend que cette technique de gestion d'un droit d'accès permet de simplifier l'expérience des utilisateurs de dispositif communicant. Il suffit en effet à un utilisateur d'acheter des modules d'alimentation électrique identifiés comme étant compatibles avec leur dispositif communicant. Aucune souscription auprès d'un opérateur n'est à effectuer. L'utilisateur acquiert simultanément l'énergie électrique et le droit d'accès à un service. Aucune configuration de données d'accès n'est à effectuer au niveau du dispositif communicant 20.

Aucune limitation n'est attachée à ces différents modes de réalisation et l'homme du métier est à même d'en définir d'autres conditionnant un droit d'accès à un service en fonction d'une énergie électrique disponible dans un module d'alimentation électrique.

La technique de gestion d'un droit d'accès est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 124, 125, 126 sont agencés pour mettre en oeuvre celles des étapes du procédé de gestion d'un droit d'accès précédemment décrit, mises en oeuvre par le module d'alimentation électrique. Il s'agit de préférence de modules logiciels comprenant des instructions logicielles pour faire exécuter celles des étapes (ou des actions) du procédé de gestion précédemment décrit, mises en oeuvre par un module d'alimentation électrique. L'invention concerne donc aussi :
- un programme pour un module d'alimentation électrique, comprenant des instructions de code de programme destinées à commander l'exécution des étapes (ou des actions) du procédé de gestion précédemment décrit, lorsque ledit programme est exécuté par ce module d'alimentation électrique ;
- un support d'enregistrement lisible par un module d'alimentation électrique sur lequel est enregistré le programme pour un module d'alimentation électrique.

Dans un mode de réalisation particulier, les modules 224, 225, 226 sont agencés pour mettre en oeuvre celles des étapes du procédé de gestion d'un droit d'accès précédemment décrit, mises en oeuvre par le dispositif communicant. Il s'agit de préférence de modules logiciels comprenant des instructions logicielles pour faire exécuter celles des étapes (ou des actions) du procédé de gestion précédemment décrit, mises en oeuvre par un dispositif communicant. L'invention concerne donc aussi :
- un programme pour un dispositif communicant, comprenant des instructions de code de programme destinées à commander l'exécution de celles des étapes (ou des actions) du procédé de gestion précédemment décrit, lorsque ledit programme est exécuté par ce dispositif communicant ;
- un support d'enregistrement lisible par un dispositif communicant sur lequel est enregistré le programme pour un dispositif communicant.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé de gestion d'un droit d'accès à un service pour un dispositif communicant (20), ledit procédé comprenant :
- une authentification (E3, F2) d'un élément de sécurité (12) d'un module d'alimentation électrique (10) par un élément de sécurité (22) du dispositif à l'issue de laquelle lesdits éléments de sécurité sont associés, ladite authentification étant déclenchée par une détection (E1) d'un début de distribution d'énergie électrique audit dispositif pour alimenter électriquement ledit dispositif ;
- une configuration (E5, F5) de l'élément de sécurité du dispositif par l'élément de sécurité du module d'alimentation, l'élément de sécurité du dispositif une fois configuré disposant d'un droit d'accès à un service valide permettant au dispositif d'accéder au service et ledit droit d'accès restant valide tant que ledit dispositif est alimenté par ledit module d'alimentation électrique ;
**caractérisé en ce que** le procédé comprend une invalidation par l'élément de sécurité du module d'alimentation du droit d'accès dont dispose l'élément de sécurité du dispositif sur détection d'une énergie électrique résiduelle inférieure à un seuil.

2. Procédé de gestion selon la revendication 1, dans lequel une association antérieure avec un autre dispositif est supprimée suite audit début de distribution d'énergie électrique.

3. Procédé de gestion selon la revendication 1, dans lequel ladite configuration comprend au moins un envoi d'une information relative à la validité du droit d'accès à l'élément de sécurité du dispositif.

4. Procédé de gestion selon la revendication 1, dans lequel la configuration comprend un envoi d'une information relative à un profil d'accès au réseau de communication à télécharger par l'élément de sécurité du dispositif.

5. Procédé de gestion selon la revendication 1, dans lequel la configuration comprend une activation du droit d'accès mémorisé par l'élément de sécurité du dispositif.

6. Procédé de gestion selon la revendication 1, dans lequel la configuration comprend un envoi par l'élément de sécurité du module d'alimentation à l'élément de sécurité du dispositif d'au moins une clé de sécurité.

7. Module d'alimentation électrique (10) destiné à alimenter électriquement un dispositif communicant (20), ledit module comprenant :
- des moyens (11) pour alimenter électriquement un dispositif à alimenter ;
- un élément de sécurité (12) comprenant :
- un module de détection (124), agencé pour détecter un début de distribution d'énergie électrique audit dispositif ;
- un module d'authentification (125), agencé pour s'authentifier auprès d'un élément de sécurité (22) du dispositif à l'issue de laquelle lesdits éléments de sécurité sont associés ;
- un module de configuration (126), agencé pour configurer l'élément de sécurité du dispositif, l'élément de sécurité du dispositif une fois configuré disposant d'un droit d'accès à un service valide permettant au dispositif d'accéder au service et ledit droit d'accès restant valide tant que ledit dispositif est alimenté par ledit module d'alimentation électrique ;
**caractérisé en ce que** le module d'alimentation électrique comprend un module de commande, agencé pour commander une invalidation du droit d'accès dont dispose l'élément de sécurité du dispositif sur détection d'une énergie électrique résiduelle inférieure à un seuil.

8. Programme pour un module d'alimentation électrique, comprenant des instructions de code de programme destinées à commander l'exécution de celles des actions du procédé de gestion d'un droit d'accès réseau selon l'une des revendications 1 à 6 mises en oeuvre par le module, lorsque ledit programme est exécuté par ledit module.

9. Support d'enregistrement lisible par un module d'alimentation électrique sur lequel est enregistré le programme selon la revendication 8.

## Patentansprüche

1. Verfahren zur Verwaltung einer Zugangsberechtigung zu einem Dienst für eine Kommunikationsvorrichtung (20), wobei das Verfahren Folgendes umfasst:
- ein Authentifizieren (E3, F2) eines Sicherheitselements (12) eines Stromversorgungsmoduls (10) durch ein Sicherheitselement (22) der Vorrichtung, nach welchem die Sicherheitselemente zugeordnet sind, wobei die Authentifizierung durch eine Detektion (E1) eines Beginns einer Abgabe elektrischer Energie an die Vorrichtung, um die Vorrichtung mit Strom zu versorgen, ausgelöst wird;
- ein Konfigurieren (E5, F5) des Sicherheitselements der Vorrichtung durch das Sicherheitselement des Versorgungsmoduls, wobei das Sicherheitselement der Vorrichtung, sobald es konfiguriert ist, über eine gültige Zugangsberechtigung zu einem Dienst verfügt, die es der Vorrichtung ermöglicht, auf den Dienst zuzugreifen, und die Zugangsberechtigung gültig bleibt, solange die Vorrichtung vom Stromversorgungsmodul versorgt wird;
**dadurch gekennzeichnet, dass** das Verfahren ein Aufheben der Zugangsberechtigung, über die das Sicherheitselement der Vorrichtung verfügt, durch das Sicherheitselement des Versorgungsmoduls bei Detektion einer restlichen elektrischen Energie unterhalb einer Schwelle umfasst.

2. Verwaltungsverfahren nach Anspruch 1, wobei eine vorige Zuordnung mit einer anderen Vorrichtung nach dem Beginn der Ausgabe elektrischer Energie gelöscht wird.

3. Verwaltungsverfahren nach Anspruch 1, wobei das Konfigurieren wenigstens ein Senden einer Information in Bezug auf die Gültigkeit der Zugangsberechtigung an das Sicherheitselement der Vorrichtung umfasst.

4. Verwaltungsverfahren nach Anspruch 1, wobei das Konfigurieren ein Senden einer Information in Bezug auf ein Profil für Zugang zum Kommunikationsnetz umfasst, das vom Sicherheitselement der Vorrichtung herunterzuladen ist.

5. Verwaltungsverfahren nach Anspruch 1, wobei das Konfigurieren ein Aktivieren der Zugangsberechtigung umfasst, die vom Sicherheitselement der Vorrichtung gespeichert ist.

6. Verwaltungsverfahren nach Anspruch 1, wobei das Konfigurieren ein Senden wenigstens eines Sicherheitsschlüssels durch das Sicherheitselement des Versorgungsmoduls an das Sicherheitselement der Vorrichtung umfasst.

7. Stromversorgungsmodul (10) zur Stromversorgung einer Kommunikationsvorrichtung (20), wobei das Modul Folgendes umfasst:
- Mittel (11) zur Stromversorgung einer zu versorgenden Vorrichtung;
- ein Sicherheitselement (12), das Folgendes umfasst:
- ein Detektionsmodul (124), das dafür angeordnet ist, einen Beginn einer Abgabe elektrischer Energie an die Vorrichtung zu detektieren;
- ein Modul zum Authentifizieren (125), das dafür angeordnet ist, sich bei einem Sicherheitselement (22) der Vorrichtung zu authentifizieren, nach welchem die Sicherheitselemente zugeordnet sind;
- ein Konfigurationsmodul (126), das dafür angeordnet ist, das Sicherheitselement der Vorrichtung zu konfigurieren, wobei das Sicherheitselement der Vorrichtung, sobald es konfiguriert ist, über eine gültige Zugangsberechtigung zu einem Dienst verfügt, die es der Vorrichtung ermöglicht, auf den Dienst zuzugreifen, und die Zugangsberechtigung gültig bleibt, solange die Vorrichtung vom Stromversorgungsmodul versorgt wird;
**dadurch gekennzeichnet, dass** das Stromversorgungsmodul ein Steuermodul umfasst, das dafür angeordnet ist, ein Aufheben der Zugangsberechtigung, über die das Sicherheitselement der Vorrichtung verfügt, bei Detektion einer restlichen elektrischen Energie unterhalb einer Schwelle zu steuern.

8. Programm für ein Stromversorgungsmodul, das Programmcode-Anweisungen umfasst, die dazu bestimmt sind, die Ausführung jener der Aktionen des Verfahrens zur Verwaltung einer Netzzugangsberechtigung nach einem der Ansprüche 1 bis 6 zu steuern, die von dem Modul durchgeführt werden, wenn das Programm von dem Modul ausgeführt wird.

9. Speichermedium, das von einem Stromversorgungsmodul gelesen werden kann, auf dem das Programm nach Anspruch 8 gespeichert ist.

## Claims

1. Method for managing a right of access to a service for a communicating device (20), said method comprising:
- authentication (E3, F2) of a security element (12) of an electric power supply module (10) by a security element (22) of the device, at the end of which authentication said security elements are associated, said authentication being triggered by a detection (E1) of a start of delivery of electric power to said device in order to supply electric power to said device;
- configuration (E5, F5) of the security element of the device by the security element of the power supply module, the security element of the device, once configured, having a valid right of access to a service, allowing the device to access the service, and said access right remaining valid for as long as said device is supplied with power by said electric power supply module; **characterized in that** the method comprises invalidation, by the security element of the power supply module, of the access right possessed by the security element of the device upon detection of remaining electric power that is below a threshold.

2. Management method according to Claim 1, wherein a previous association with another device is deleted following said start of delivery of electric power.

3. Management method according to Claim 1, wherein said configuration comprises at least sending information in relation to the validity of the access right to the security element of the device.

4. Management method according to Claim 1, wherein the configuration comprises sending information in relation to a communication network access profile to be downloaded by the security element of the device.

5. Management method according to Claim 1, wherein the configuration comprises activating the access right stored by the security element of the device.

6. Management method according to Claim 1, wherein the configuration comprises the security element of the power supply module sending at least one security key to the security element of the device.

7. Electric power supply module (10) intended to supply electric power to a communicating device (20), said module comprising:
- means (11) for supplying electric power to a device to be supplied with power;
- a security element (12) comprising:
- a detection module (124), designed to detect a start of delivery of electric power to said device;
- an authentication module (125), designed to authenticate itself to a security element (22) of the device, at the end of which authentication said security elements are associated;
- a configuration module (126), designed to configure the security element of the device, the security element of the device, once configured, having a valid right of access to a service, allowing the device to access the service, and said access right remaining valid for as long as said device is supplied with power by said electric power supply module; **characterized in that** the electric power supply module comprises a command module, designed to command invalidation of the access right possessed by the security element of the device upon detection of remaining electric power that is below a threshold.

8. Program for an electric power supply module, comprising program code instructions intended to command the execution of the actions of the method for managing a network access right according to one of Claims 1 to 6 that are implemented by the module when said program is executed by said module.

9. Recording medium able to be read by an electric power supply module and on which the program according to Claim 8 is recorded.
